(19) Europäisches Patentamt / European Patent Office / Office européen des brevets

(11) **EP 3 866 328 B1**

(12) **EUROPEAN PATENT SPECIFICATION**

(45) Date of publication and mention
of the grant of the patent:
**18.12.2024  Bulletin 2024/51**

(21) Application number: **21156890.2**

(22) Date of filing: **12.02.2021**

(51) International Patent Classification (IPC):
*H02P 9/30* (2006.01)      *H02P 9/26* (2006.01)
*H02P 9/08* (2006.01)

(52) Cooperative Patent Classification (CPC):
**H02P 9/08; H02P 9/26; H02P 9/30; H02P 9/302**

(54) **DIRECT CURRENT POWER SUPPLY EXCITER MANAGEMENT**

ERREGERVERWALTUNG FÜR GLEICHSTROMVERSORGUNG

GESTION D'EXCITATEUR D'ALIMENTATION ÉLECTRIQUE À COURANT CONTINU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.02.2020   US 202016788952**

(43) Date of publication of application:
**18.08.2021   Bulletin 2021/33**

(73) Proprietor: **Hamilton Sundstrand Corporation
Charlotte, NC 28217-4578 (US)**

(72) Inventor: **DUESTERHOEFT, Kurt W.
Rockford, IL 61109 (US)**

(74) Representative: **Dehns
10 Old Bailey
London EC4M 7NG (GB)**

(56) References cited:
WO-A1-2016/133505      US-A- 5 508 601
US-A1- 2004 108 726

**Description**

TECHNICAL FIELD

The disclosure is concerned with managing direct current power supply.

BACKGROUND

Aircraft often include power supplies for supplying electrical buses with electricity. Electrical buses may be supplied by rotating machines having exciters commonly integrated or within a common shaft to generate magnetic fields. Electrical buses may be designated to provide a particular voltage (e.g., 270). Aircraft electrical buses may operate any number of aircraft loads, including propulsion. Power supplies are disclosed in US2004/108726. DC electrical systems that use the rectified output of an AC generator traditionally require two voltage regulation loops; one on the DC side and one on the AC side. Two control loops are needed to deal with a load-off transient that leaves little or no load on the system. There is a need for a simplified control.

BRIEF DESCRIPTION

A direct current power supply is provided as defined by claim 1.

In addition to one or more of the features described above, or as an alternative, further embodiments may include that the multiphase output includes a first multiphase output, a second multiphase output, and a third multiphase output. In addition to one or more of the features described above, or as an alternative, further embodiments may include that the phase voltages comprise a first phase voltages with respect to a neutral reference, a second phase voltages with respect to the neutral reference, and a third phase voltages with respect to the neutral reference, respectively. In addition to one or more of the features described above, or as an alternative, further embodiments may include that the maximum line-to-line voltage is a maximum value of one of: the first phase voltages less the second phase voltages; the second phase voltages less the third phase voltages; or the third phase voltages less the first phase voltages.

In addition to one or more of the features described above, or as an alternative, further embodiments may include that the maximum line-to-line voltage is the maximum value less a diode constant.

In addition to one or more of the features described above, or as an alternative, further embodiments may include that the generator operates according to a generator cycle that is defined as one full electrical cycle of the generator, and the maximum line-to-line voltage is equal to each of the first phase voltages less the second phase voltages, the second phase voltages less the third phase voltages, and the third phase voltages less the first phase voltages once during the generator cycle.

[Deleted].

Also disclosed is a direct current power supply having a controller. The direct current power supply includes digital storage. The direct current power supply includes instructions stored on the digital storage. The instructions are operable upon execution by the controller to receive a phase voltages associated with a multiphase output of a generator, define a maximum line-to-line voltage based on the phase voltages, and operate an exciter winding driver with an oscillating signal generated according to the maximum line-to-line voltage, wherein the phase voltages defines a quadratic mean that is maintained greater than a direct current link capacitor voltage during a load-off.

In addition to one or more of the features described above, or as an alternative, further embodiments may include that the multiphase output is a first multiphase output, a second multiphase output, and a third multiphase output. In addition to one or more of the features described above, or as an alternative, further embodiments may include that the phase voltages is a first phase voltages with respect to a neutral reference, a second phase voltages with respect to the neutral reference, and a third phase voltages with respect to the neutral reference, respectively.

In addition to one or more of the features described above, or as an alternative, further embodiments may include that the maximum line-to-line voltage is a maximum value of the first phase voltages less the second phase voltages, the second phase voltages less the third phase voltages, or the third phase voltages less the first phase voltages.

In addition to one or more of the features described above, or as an alternative, further embodiments may include that the maximum line-to-line voltage is the maximum value less a diode constant.

In addition to one or more of the features described above, or as an alternative, further embodiments may include a rectifier conductive with the multiphase output having diodes oriented to rectify the multiphase output. In addition to one or more of the features described above, or as an alternative, further embodiments may include a direct current link capacitor configured to provide a direct current link capacitor voltage from the rectifier based on the multiphase output.

[Deleted]

In addition to one or more of the features described above, or as an alternative, further embodiments may include that the maximum line-to-line voltage is equal to each of the first phase voltages less the second phase voltages,

the second phase voltages less the third phase voltages, and the third phase voltages less the first phase voltages once during a generator cycle.

In addition to one or more of the features described above, or as an alternative, further embodiments may include an exciter having an excitation winding and defining an excitation voltage. In addition to one or more of the features described above, or as an alternative, further embodiments may include the generator operable to generate the multiphase output defining the phase voltages based on the excitation voltage.

Also provided is a method for exciting a generator of a direct current power supply with a controller as defined by claim 5.

In addition to one or more of the features described above, or as an alternative, further embodiments may include that the phase voltages is a first phase voltages with respect to a neutral reference, a second phase voltages with respect to the neutral reference, and a third phase voltages with respect to the neutral reference, and the maximum line-to-line voltage is a maximum value of the first phase voltages less the second phase voltages, the second phase voltages less the third phase voltages, or the third phase voltages less the first phase voltages.

In addition to one or more of the features described above, or as an alternative, further embodiments may include that the maximum line-to-line voltage is the maximum value less a diode constant.

In addition to one or more of the features described above, or as an alternative, further embodiments may include that the maximum line-to-line voltage is equal to each of the first phase voltages less the second phase voltages, the second phase voltages less the third phase voltages, and the third phase voltages less the first phase voltages once during a generator cycle.

In addition to one or more of the features described above, or as an alternative, further embodiments may include energizing an excitation winding associated with the exciter winding driver to excite the generator.

[Deleted].

In addition to one or more of the features described above, or as an alternative, further embodiments may include that the oscillating signal defines a pulse width modulation signal having a duty cycle sized to maintain a direct current link capacitor at a voltage output setpoint.

BRIEF DESCRIPTION OF THE DRAWINGS

The following descriptions should not be considered limiting in any way. With reference to the accompanying drawings:

FIG. 1 illustrates a direct current power supply in accordance with one or more implementations of the present disclosure;

FIG. 2 illustrates phase voltages of a generator in accordance with one or more implementations of the present disclosure; and

FIG. 3 illustrates a method for exciting a generator in accordance with one or more implementations of the present disclosure.

DETAILED DESCRIPTION

A detailed description is provided herein. It should be appreciated that any combinations of circuitry, electronics, or communications may be used. Any type of electric machine or generation means may be implemented.

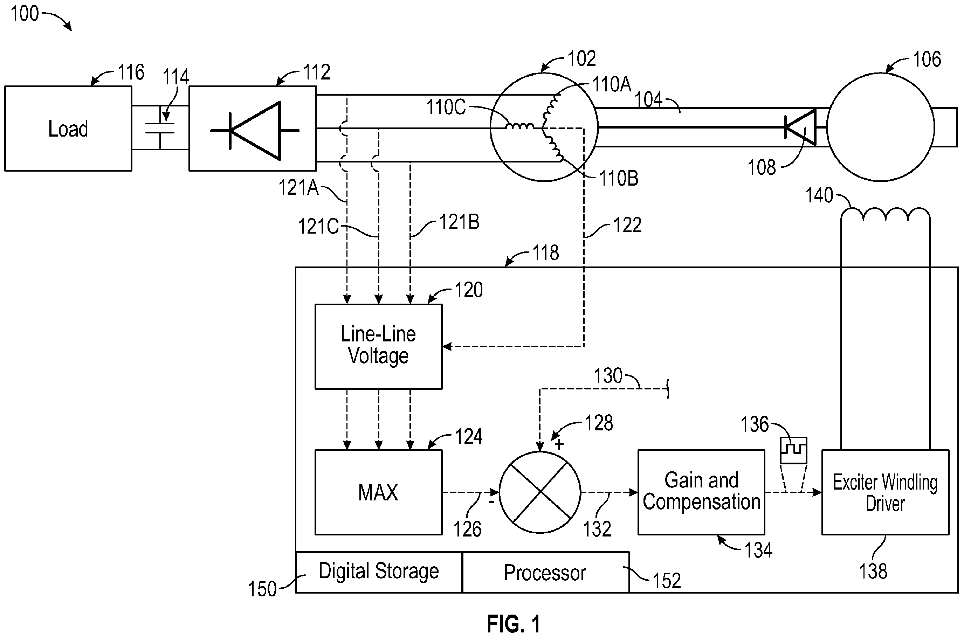

Referring to FIG. 1, a schematic diagram of a direct current power supply 100 is shown in accordance with one or more implementations of the present disclosure. The direct current power supply 100 includes an exciter 106. The exciter 106 is driven by one or more excitation windings 140. It should be appreciated that the excitation winding 140 may be unitarily disposed with the exciter 106 (e.g., stator). That is, excitation winding 140 may be the stator, and exciter 106 may be the rotor or portions thereof. The excitation windings 140 may be self-powered, auxiliary powered, or permanent magnet powered (not shown). The exciter 106 is disposed on a common shaft or rotor 104 with a generator 102. The exciter 106 output is rectified with excitation rectifier 108 to generate the rotating electric field on the rotor 104. The rectifier 112 may have diodes in a typical half-leg configuration for each of the multiphase outputs 110A, 110B, 110C to rectify the alternating current from the generator 102. The electric field drives multiphase outputs 110A, 110B, 110C from the generator 102. The multiphase outputs 110A, 110B, 110C are rectified with rectifier 112. A direct current link capacitor 114 is used to smooth the rectified output from rectifier 112 to supply a direct current link capacitor voltage (e.g., the voltage across the capacitor) to the load 116.

Phase voltages 121A, 121B, 121C may be measured from the multiphase outputs 110A, 110B, 110C, using any measurement implementation. It should be appreciated that a three-phase generator 102 is shown merely as an example and that any number of phases greater or less than three are contemplated in this disclosure. The phase voltages 121A, 121B, 121C may be determined with respect to ground or neutral 122. Although shown in a Wye configuration, the generator 102 may be wound in a Delta configuration. It should be appreciated that the multiphase outputs 110A, 110B, 110C may consist of only one output from the generator 102.

A controller 118 may be configured to receive the phase voltages 121A, 121B, 121C. The controller 118 may include any combination of processors, field programmable gate arrays (FPGA), or application specific integrated circuits (ASIC), collectively processors 152. The controller 118 may include digital storage 150, nonvolatile, operable to store machine instructions from the processors and other processing mechanisms to receive, calculate, and control devices, as necessary. Machine instructions may be stored (e.g., stored instructions, stored machine instructions, stored steps) in any language or representation, including but not limited to machine code, assembly instructions, C, C++, C#, PYTHON. Communications may be realized through any protocol or medium. It should be appreciated that instructions may include any combination of circuitry, logic, memory, and/or machine code, to facilitate operation of the generator 102.

The controller 118 may have instructions operable upon execution by the processor 152 to determine a line-to-line voltage 120. The line-to-line voltage 120 may be defined as shown in equations 1-3.

$$|V_{AB}| = |V_{AN} - V_{BN}| \qquad (1)$$

$$|V_{BC}| = |V_{BN} - V_{CN}| \qquad (2)$$

$$|V_{CA}| = |V_{CN} - V_{AN}| \qquad (3)$$

, where the $V_{AN}$ is the phase voltage, which may be defined as a first phase voltage, between the phase voltage 121A and the neutral reference 122, where the $V_{BN}$ is the phase voltage, which may be defined as a second phase voltage, between the phase voltage 121B and the neutral reference 122, where the $V_{CN}$ is the phase voltage, which may be defined as a third phase voltage, between the phase voltages 121C and the neutral reference 122. It should be appreciated that the first, second, and third voltages may be interchanged or redefined (e.g., first phase voltage is defined as the second phase voltage). In the circumstance where the generator 102 only generates one multiphase output, the line-to-line voltage is the absolute value of the peak-to-peak voltage with respect to neutral.

As such, the line-to-line, or line-to-neutral, voltages ($|V_{AB}|$, $|V_{BC}|$, $|V_{CA}|$) may be directly measured, received, or calculated by the controller 118. A maximum line-to-line voltage 126 may be determined by the controller 118 through maximum line-to-line instructions 124 stored on the digital storage 150. The maximum line-to-line instructions 124 may be determined by equation 4.

$$V_{DC} = MAX[|V_{AN} - V_{BN}|, |V_{BN} - V_{CN}|, |V_{CN} - V_{AN}|] - K_{DIODE} \qquad (4)$$

, where $V_{DC}$ is the expected output voltage of the direct current power supply 100 according to the maximum line-to-line voltage 126 based on phase voltages 121A, 121B, 121C. As such, the controller 118 can control the output voltage of the direct current power supply 100 without direct measurement. The maximum line-to-line voltage 126 may be offset or otherwise adjusted by a diode constant, $K_{DIODE}$. The diode constant may be measured or estimated based on the configuration or rating of the direct current power supply 100 or otherwise.

As shown, the controller 118 may include a feedback loop as indicated by summation block 128 and voltage output setpoint 130. The controller 118 may include gain and compensation instructions 134 to control the exciter winding driver 138. Gain and compensation instructions 134 may output an oscillating signal 136 to the exciter winding driver 138 using pulse width modulation hardware or other modulation hardware (e.g., analog outputs). It should be appreciated that the driver may be operable to receive digital instructions as well. The oscillating signal 136 may be a pulse width modulation signal. The pulse width modulation signal may have a duty cycle based on the desired excitation voltage of the generator 102 to result in the required direct current output at the direct current link capacitor 114. As an example, the voltage output setpoint 130 may be defined as the 270 volts. The duty cycle may be defined as the ratio between HIGH or TRUE and LOW or FALSE values of the oscillating signal 136. The exciter winding driver 138 may be of any type, including solid state circuity operable to energize the exciter winding 140 to induce current in the exciter 106.

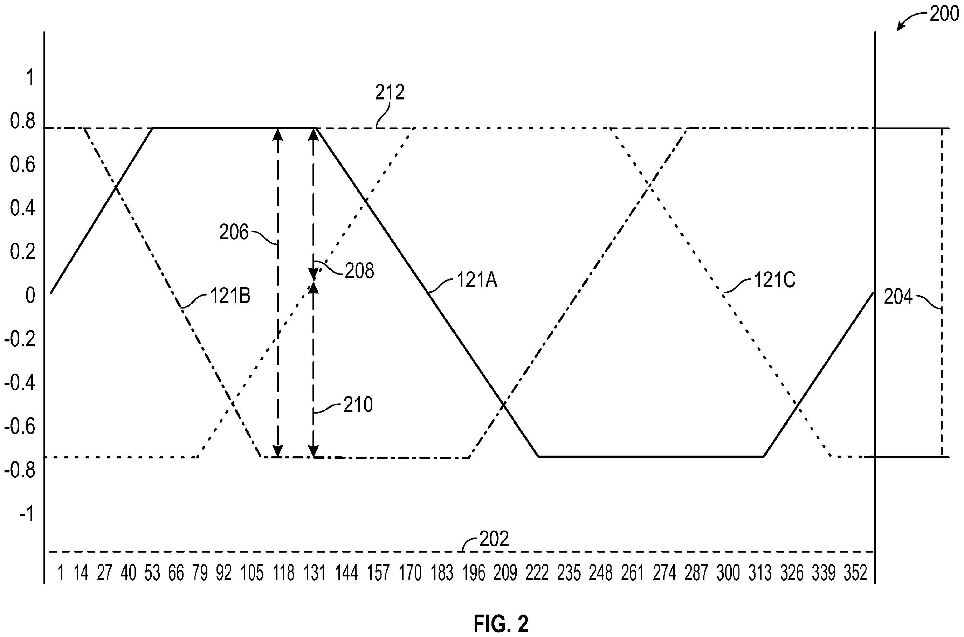

Referring to FIG. 2, phase voltages 121A, 121B, 121C are illustrated in accordance with one or more implementation of the present disclosure. A generator cycle 202 is shown, corresponding with one full electrical cycle 202 of the generator 102. A peak-to-peak voltage 204 is illustrated where the phase voltages 121A, 121B, 121C are clamped, indicating conduction of the rectifier 112 and voltage change resistance by the direct current link capacitor 114. Such clamping can limit the maximum voltage of the phase voltages 121A, 121B, 121C and enables a more accurate depiction of the direct current output voltage at the direct current link capacitor 114 by measurement of the phase voltages 121A, 121B, 121C. When the phase voltages 121A, 121B, 121C are clamped a direct current measurement to maintain the output voltage is redundant. Phase voltages 121A, 121B, 121C may become unclamped during very light loads, no-load, or off-load conditions (e.g., startup loads, transient loads, load-shedding). As an example, direct current load 116 may be a direct current bus of an aircraft supply various aircraft loads. As loads switch on and off, stored energy in the generator 102 is transferred to the direct current link capacitor 114. As a result, the rectifier 112 may become reverse biased and the multiphase outputs unclamped. The controller 118 may lower the excitation voltage to decrease the output voltage of the generator 102, placing the generator 102 in a potentially under-excited condition. In the under-excited condition, the generator 102 may be unable to respond quickly to subsequent load-on transients (e.g., large voltage drops during the transient). Instead of monitoring both the direct current output voltage at the direct current link capacitor 114 and the phase voltages 121A, 121B, 121C, requiring two or more sensing loops; peak-to-peak or line-to-line voltage may be used based on the phase voltages 121A, 121B, 121C being in a cut-off state. As such, the amount of sensing loops may be reduced.

As shown the line-to-line voltage $|V_{AB}|$ 206 is based on the absolute value of the first phase voltage 121A, $V_{AN}$, less the second phase voltage 121B, $V_{BN}$; the line-to-line voltage $|V_{BC}|$ 208 is based on the absolute value of the second phase voltage 121B, $V_{BN}$, less the third phase voltage 121C, $V_{CN}$; and the line-to-line voltage $|V_{CA}|$ 210 is based on the absolute value of the third phase voltage 121C, $V_{CN}$, less the first phase voltage 121A, $V_{AN}$. Controlling the exciter winding driver 138 with the maximum value of these results in ensuring under-excitation is avoided during offload while maintaining the quadratic mean 212 or voltage output of the direct current link capacitor 114 during a load-off. This generator 102 control and direct current power supply 100 control reduces the sensing loop requirements without under-excitation.

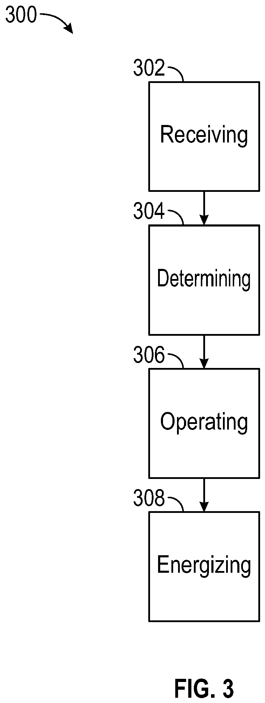

Referring to FIG. 3, a method 300 is shown. The method 300 may include additional steps or omit steps. The method 300 may include steps that may be performed sequentially or simultaneously. In step 302, the controller 118 receives phase voltages 121A, 121B, 121C. The phase voltages 121A, 121B, 121C may be received in any medium and by any mode. As a non-limiting example, the phase voltages 121A, 121B, 121C may be received as digital voltage values. As another, the phase voltages 121A, 121B, 121C may be received as direct or adjusted voltages directly from multiphase outputs 110A, 110B, 110C. A number of other implementations are contemplated in this disclosure.

In step 304, the controller 118 determines a maximum line-to-line voltage 126 ($|V_{AB}|$, $|V_{BC}|$, $|V_{CA}|$) based on the phase voltages 121A, 121B, 121C. Instructions may include a simple digital or analog comparator to determine the maximum line-to-line voltage 126. As such, the controller 118 is programmed to operate the exciter winding driver 138 in step 306. The operation may be based on any number of signals, including analog or digital signals. The operation may be based on an oscillating signal 136. The oscillating signal 136 may be a pulse width modulation signal having a duty cycle sized to maintain an operating voltage threshold of the direct current power supply 100. As such, the exciter winding driver 138 operates the excitation winding 140 to excite the generator 102, according to the maximum line-to-line voltage 126.

DC electrical systems that use the rectified output of an AC generator traditionally require two voltage regulation loops; one on the DC side and one on the AC side of the rectifier. Two control loops are needed to deal with a load-off transient that leaves little or no load on the system. The technical effect of the present invention is that the invention can deal with load-off transients with a single control loop and this simplifies the voltage regulator design.

While the present disclosure has been described with reference to provided implements, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

**Claims**

1.   A direct current power supply comprising:

an exciter (106) having an excitation winding (140) and operable to output an excitation voltage;
a generator (102) connected to the exciter and that generates a multiphase output having phase voltages based on the excitation voltage;
a rectifier (112) configured to receive the multiphase output and having diodes oriented to rectify multiphase output;
a direct current link capacitor (114) connected to an output of the rectifier that generates a direct current link capacitor voltage;
a controller (118) having an exciter winding driver, digital storage, and instructions stored on the digital storage operable upon execution by the controller to:

receive a phase voltage for each phase of the multiphase output;
define a maximum line-to-line voltage based on the phase voltages;
generate an oscillating signal according to the maximum line-to-line voltage; and
energize the exciter winding driver to drive the excitation winding based on the oscillating signal; and **characterised in that**:

the phase voltages define a quadratic mean that is maintained greater than the direct current link capacitor voltage during a load-off.

2. The direct current power supply of claim 1, wherein:

the multiphase output includes a first multiphase output (110A), a second multiphase output (110B), and a third multiphase output (110C),
the phase voltages comprise a first phase voltages (121A)with respect to a neutral reference, a second phase voltages (121B) with respect to the neutral reference, and a third phase voltages (121C) with respect to the neutral reference, respectively, and
the maximum line-to-line voltage is a maximum value of one of: the first phase voltages less the second phase voltages; the second phase voltages less the third phase voltages; or the third phase voltages less the first phase voltages.

3. The direct current power supply of claim 2, wherein the maximum line-to-line voltage is the maximum value less a diode constant.

4. The direct current power supply of claim 2, wherein the generator operates according to a generator cycle that is defined as one full electrical cycle of the generator, and the maximum line-to-line voltage is equal to each of the first phase voltages less the second phase voltages, the second phase voltages less the third phase voltages, and the third phase voltages less the first phase voltages once during the generator cycle.

5. A method for exciting a generator of a direct current power supply with a controller, comprising:

receiving phase voltages associated with multiphase output of the generator;
determining a maximum line-to-line voltage based on the phase voltages;
operating an exciter winding driver with an oscillating signal generated according to the maximum line-to-line voltage; and **characterised in that**:
the phase voltages define a quadratic mean that is maintained greater than a direct current link capacitor voltage during a load-off.

6. The method of claim 5, wherein the phase voltages is a first phase voltages with respect to a neutral reference, a second phase voltages with respect to the neutral reference, and a third phase voltages with respect to the neutral reference, and the maximum line-to-line voltage is a maximum value of the first phase voltages less the second phase voltages, the second phase voltages less the third phase voltages, or the third phase voltages less the first phase voltages.

7. The method of claim 5 or 6, wherein the maximum line-to-line voltage is the maximum value less a diode constant, or wherein the maximum line-to-line voltage is equal to each of the first phase voltages less the second phase voltages, the second phase voltages less the third phase voltages, and the third phase voltages less the first phase voltages once during a generator cycle.

8. The method of claim 6, further comprising energizing an excitation winding associated with the exciter winding driver to excite the generator.

9. The method of any of claims 5 to 8, wherein the oscillating signal defines a pulse width modulation signal having a duty cycle sized to maintain a direct current link capacitor at a voltage output setpoint.

**10.** A direct current power supply having a controller comprising:

digital storage;
instructions stored on the digital storage operable upon execution by the controller to perform the method of any of claims 5 to 9.:

**11.** The direct current power supply of claim 10, further comprising

a rectifier conductive with the multiphase output having diodes oriented to rectify the multiphase output; and
a direct current link capacitor configured to provide a direct current link capacitor voltage from the rectifier based on the multiphase output.

**12.** The direct current power supply of claim 10, further comprising

an exciter having an excitation winding and defining an excitation voltage; and
the generator operable to generate the multiphase output defining the phase voltages based on the excitation voltage.

**Patentansprüche**

**1.** Gleichstromversorgung, umfassend:

einen Erreger (106), der eine Erregungswicklung (140) aufweist und dazu dient, eine Erregungsspannung auszugeben;
einen Generator (102), der mit dem Erreger verbunden ist und einen mehrphasigen Ausgang mit Phasenspannungen basierend auf der Erregungsspannung erzeugt;
einen Gleichrichter (112), der dazu konfiguriert ist, den mehrphasigen Ausgang zu empfangen, und Dioden aufweist, die ausgerichtet sind, um den mehrphasigen Ausgang gleichzurichten;
einen Gleichstrom-Zwischenkreiskondensator (114), der mit einem Ausgang des Gleichrichters verbunden ist und eine Gleichstrom-Zwischenkreiskondensatorspannung erzeugt;
eine Steuerung (118), die einen Erregerwicklungstreiber, einen digitalen Speicher und in dem digitalen Speicher gespeicherten Anweisungen aufweist, die bei Ausführung durch die Steuerung zu Folgendem dienen:

Empfangen einer Phasenspannung für jede Phase des mehrphasigen Ausgangs;
Definieren einer maximalen verketteten Spannung basierend auf den Phasenspannungen;
Erzeugen eines Schwingungssignals gemäß der maximalen verketteten Spannung; und
Versorgen des Erregerwicklungstreibers mit Strom, um die Erregungswicklung basierend auf dem Schwingungssignals anzusteuern; und **dadurch gekennzeichnet, dass**:
die Phasenspannungen einen quadratischen Mittelwert definieren, der während einer Entlastung größer als die Gleichstrom-Zwischenkreiskondensatorspannung bleibt.

**2.** Gleichstromversorgung nach Anspruch 1, wobei:

der mehrphasige Ausgang einen ersten mehrphasigen Ausgang (110A), einen zweiten mehrphasigen Ausgang (110B) und einen dritten mehrphasigen Ausgang (110C) beinhaltet,
die Phasenspannungen erste Phasenspannungen (121A) in Bezug auf eine Nullreferenz, zweite Phasenspannungen (121B) in Bezug auf die Nullreferenz bzw. dritte Phasenspannungen (121C) in Bezug auf die Nullreferenz umfassen, und
die maximale verkettete Spannung der Maximalwert eines von Folgenden ist: den ersten Phasenspannungen abzüglich den zweiten Phasenspannungen; den zweiten Phasenspannungen abzüglich den dritten Phasenspannungen; oder den dritten Phasenspannungen abzüglich den ersten Phasenspannungen.

**3.** Gleichstromversorgung nach Anspruch 2, wobei die maximale verkettete Spannung der Maximalwert abzüglich einer Diodenkonstante ist.

**4.** Gleichstromversorgung nach Anspruch 2, wobei der Generator gemäß einem Generatorzyklus arbeitet, der als ein vollständiger elektrischer Zyklus des Generators definiert ist, und die maximale verkettete Spannung einmal während des Generatorzyklus gleich jeder von den ersten Phasenspannungen abzüglich der zweiten Phasenspannungen, den zweiten Phasenspannungen abzüglich der dritten Phasenspannungen und den dritten Phasenspannungen abzüglich der ersten Phasenspannungen ist.

5. Verfahren zum Erregen eines Generators einer Gleichstromversorgung mit einer Steuerung, umfassend:

Empfangen von Phasenspannungen, die dem mehrphasigen Ausgang des Generators zugeordnet sind;
Bestimmen einer maximalen verketteten Spannung basierend auf den Phasenspannungen;
Betreiben eines Erregerwicklungstreibers mit einem gemäß der maximalen verketteten Spannung erzeugten Schwingungssignal; und **dadurch gekennzeichnet, dass**:
die Phasenspannungen einen quadratischen Mittelwert definieren, der während einer Entlastung größer als eine Gleichstrom-Zwischenkreiskondensatorspannung bleibt.

6. Verfahren nach Anspruch 5, wobei die Phasenspannungen erste Phasenspannungen in Bezug auf eine Nullreferenz, zweite Phasenspannungen in Bezug auf die Nullreferenz und dritte Phasenspannungen in Bezug auf die Nullreferenz sind und die maximale verkettete Spannung ein Maximalwert der ersten Phasenspannungen abzüglich der zweiten Phasenspannungen, der zweiten Phasenspannungen abzüglich der dritten Phasenspannungen oder der dritten Phasenspannungen abzüglich der ersten Phasenspannungen ist.

7. Verfahren nach Anspruch 5 oder 6, wobei die maximale verkettete Spannung der Maximalwert abzüglich einer Diodenkonstante ist, oder
die maximale verkettete Spannung einmal während eines Generatorzyklus gleich jeder von den ersten Phasenspannungen abzüglich den zweiten Phasenspannungen, den zweiten Phasenspannungen abzüglich den dritten Phasenspannungen und den dritten Phasenspannungen abzüglich den ersten Phasenspannungen ist.

8. Verfahren nach Anspruch 6, ferner umfassend Versorgen einer dem Erregerwicklungstreiber zugeordneten Erregungswicklung mit Strom, um den Generator zu erregen.

9. Verfahren nach einem der Ansprüche 5 bis 8, wobei das Schwingungssignal ein Pulsbreitenmodulationssignal mit einem Abtastverhältnis definiert, das so bemessen ist, dass ein Gleichstrom-Zwischenkreiskondensator auf einem Sollwert für die Ausgangsspannung gehalten wird.

10. Gleichstromversorgung mit einer Steuerung, umfassend:

digitalen Speicher;
auf dem digitalen Speicher gespeicherte Anweisungen, die bei Ausführung durch die Steuerung dazu dienen, das Verfahren nach einem der Ansprüche 5 bis 9 durchzuführen.

11. Gleichstromversorgung nach Anspruch 10, ferner umfassend einen Gleichrichter, der mit dem mehrphasigen Ausgang leitend ist und Dioden aufweist, die so ausgerichtet sind, dass sie den mehrphasigen Ausgang gleichrichten; und einen Gleichstrom-Zwischenkreiskondensator, der dazu konfiguriert ist, basierend auf dem mehrphasigen Ausgang eine Gleichstrom-Zwischenkreiskondensatorspannung von dem Gleichrichter bereitzustellen.

12. Gleichstromversorgung nach Anspruch 10, ferner umfassend einen Erreger, der eine Erregungswicklung aufweist und eine Erregungsspannung definiert; und
wobei der Generator dazu dient, den mehrphasigen Ausgang zu erzeugen, der die Phasenspannungen basierend auf der Erregerspannung definiert.

## Revendications

1. Alimentation en courant continu comprenant :

un excitateur (106) ayant un enroulement d'excitation (140) et pouvant fonctionner pour délivrer une tension d'excitation ;
un générateur (102) connecté à l'excitateur et qui génère une sortie polyphasée ayant des tensions de phase basées sur la tension d'excitation ;
un redresseur (112) configuré pour recevoir la sortie polyphasée et ayant des diodes orientées pour redresser la sortie polyphasée ;

un condensateur de liaison à courant continu (114) connecté à une sortie du redresseur qui génère une tension de condensateur de liaison à courant continu ;

un dispositif de commande (118) ayant un pilote d'enroulement d'excitation, une mémoire numérique et des instructions stockées sur la mémoire numérique pouvant être exécutées par le dispositif de commande pour :

recevoir une tension de phase pour chaque phase de la sortie polyphasée ;

définir une tension ligne à ligne maximale sur la base des tensions de phase ;

générer un signal oscillant selon la tension ligne à ligne maximale ; et

alimenter le circuit d'attaque de l'enroulement d'excitation pour entraîner l'enroulement d'excitation sur la base du signal oscillant ; et **caractérisé en ce que** :

les tensions de phase définissent une moyenne quadratique qui est maintenue supérieure à la tension du condensateur de liaison à courant continu pendant une mise hors charge.

2. Alimentation en courant continu selon la revendication 1, dans laquelle :

la sortie polyphasée comporte une première sortie polyphasée (110A), une deuxième sortie polyphasée (110B) et une troisième sortie polyphasée (110C),

les tensions de phase comprennent une des tensions de première phase (121A) par rapport à une référence neutre, des tensions de deuxième phase (121B) par rapport à la référence neutre, et des tensions de troisième phase (121C) par rapport à la référence neutre, respectivement, et

la tension ligne à ligne maximale est une valeur maximale de l'une : des tensions de la première phase moins les tensions de la deuxième phase ; des tensions de la deuxième phase moins les tensions de la troisième phase ; ou des tensions de la troisième phase moins les tensions de la première phase.

3. Alimentation en courant continu selon la revendication 2, dans laquelle la tension ligne à ligne maximale est la valeur maximale moins une constante de diode.

4. Alimentation en courant continu selon la revendication 2, dans laquelle le générateur fonctionne selon un cycle de générateur qui est défini comme un cycle électrique complet du générateur, et la tension ligne à ligne maximale est égale à chacune des tensions de première phase moins les tensions de deuxième phase, des tensions de deuxième phase moins les tensions de troisième phase, et des tensions de troisième phase moins les tensions de première phase une fois pendant le cycle du générateur.

5. Procédé d'excitation d'un générateur d'une alimentation en courant continu avec un dispositif de commande, comprenant :

la réception des tensions de phase associées à la sortie polyphasée du générateur ;

la détermination d'une tension ligne à ligne maximale sur la base des tensions de phase ;

le fonctionnement d'un pilote d'enroulement d'excitation avec un signal oscillant généré selon la tension ligne à ligne maximale ; et **caractérisé en ce que** :

les tensions de phase définissent une moyenne quadratique qui est maintenue supérieure à une tension du condensateur de liaison à courant continu pendant une mise hors charge.

6. Procédé selon la revendication 5, dans lequel les tensions de phase sont des tensions de première phase par rapport à une référence neutre, des tensions de deuxième phase par rapport à la référence neutre et des tensions de troisième phase par rapport à la référence neutre, et la tension ligne à ligne maximale est une valeur maximale des tensions de première phase moins les tensions de deuxième phase, des tensions de deuxième phase moins les tensions de troisième phase ou des tensions de troisième phase moins les tensions de première phase.

7. Procédé selon la revendication 5 ou 6, dans lequel la tension ligne à ligne maximale est la valeur maximale moins une constante de diode, ou

dans lequel la tension ligne à ligne maximale est égale à chacune des tensions de première phase moins les tensions de deuxième phase, des tensions de deuxième phase moins les tensions de troisième phase et des tensions de troisième phase moins les tensions de première phase une fois pendant un cycle de générateur.

8. Procédé selon la revendication 6, comprenant également l'excitation d'un enroulement d'excitation associé au circuit d'attaque de l'enroulement d'excitation pour exciter le générateur.

9. Procédé selon l'une quelconque des revendications 5 à 8, dans lequel le signal oscillant définit un signal de modulation de largeur d'impulsion ayant un cycle de service dimensionné pour maintenir un condensateur de liaison à courant continu à un point de consigne de sortie de tension.

10. Alimentation en courant continu comportant un dispositif de commande comprenant :

une mémoire numérique ;
des instructions stockées sur la mémoire numérique pouvant être exploitées lors de leur exécution par le dispositif de commande pour réaliser le procédé selon l'une quelconque des revendications 5 à 9 :

11. Alimentation en courant continu selon la revendication 10, comprenant également

un redresseur conducteur avec la sortie polyphasée ayant des diodes orientées pour redresser la sortie polyphasée ; et
un condensateur de liaison à courant continu configuré pour fournir une tension de condensateur de liaison à courant continu à partir du redresseur sur la base de la sortie polyphasée.

12. Alimentation en courant continu selon la revendication 10, comprenant également

un excitateur ayant un enroulement d'excitation et définissant une tension d'excitation ; et
le générateur pouvant générer la sortie polyphasée définissant les tensions de phase sur la base de la tension d'excitation.

**FIG. 1**

EP 3 866 328 B1

**FIG. 2**

300

302

Receiving

304

Determining

306

Operating

308

Energizing

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004108726 A